# EUROPEAN PATENT SPECIFICATION

(11) **EP 2 734 339 B1**
(45) Date of publication and mention of the grant of the patent: **04.11.2015**
(21) Application number: 12730967.2
(22) Date of filing: 29.06.2012
(51) Int. Cl.: B25D 17/28, B25H 1/00

(54) **POWER TOOL HOLDER**
ELEKTROWERKZEUGHALTER
FIXATION POUR OUTIL À MOTEUR

(30) Priority: 18.07.2011 SE 1100543
(43) Date of publication of application: 28.05.2014
(73) Proprietor: Atlas Copco Industrial Technique AB, 105 23 Stockholm (SE)
(72) Inventor: McGOUGAN, Robin, S-122 46 Enskede (SE)
(74) Representative: Ekeberg, Lars Gunnar
(86) International application number: PCT/EP2012/062710
(87) International publication number: WO 2013/010779

(56) References cited:
- DE-U1- 8 522 998
- US-A- 2 947 204
- US-A- 3 225 443
- US-A1- 2004 026 584
- US-B1- 7 862 265

## Description

### Field of the invention

The invention relates to a power tool holder according to the preamble of claim 1. Such a power tool holder is known from US 2004/0026584 A.

### Background art

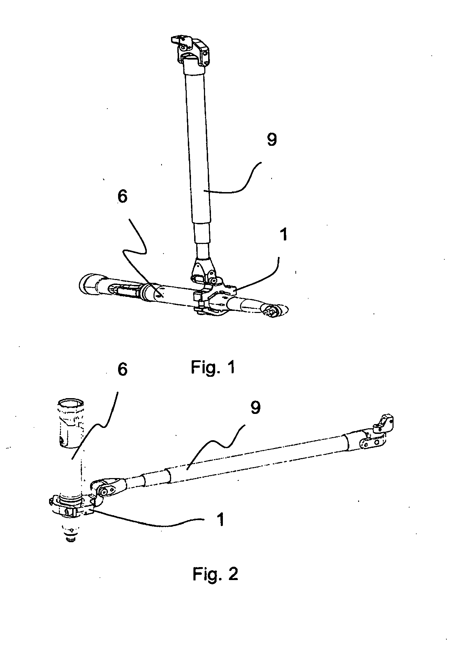

A power tool holder is depicted in fig. 1, indicated with reference numeral 1. Such holders 1 are previously known and may be used to fasten a power tool 6 to a support arm 9, which may be telescopic. The purpose of the combination of the arm 9 and the holder 1 is to relieve a worker from the weight and torque reaction forces from the tool when using the tool, for instance in nut running or drilling with the tool. In fig. 1, the known holder holding an angled power tool 6 is shown. The tool head is angled at 90° to the body of the tool. Fig. 2 depicts a known holder holding a straight power tool.

Such conventional power tool holders are by themselves quite uncomplicated devices, normally comprising two clamping parts that are held together by some means that can be used to force them together when clamping the power tool.

Since the force and torque that can be exerted by the power tool may be quite high, depending on the tool used, it is important that the tool is tightly fastened in the tool holder. Should the tool move in the tool holder during use, it may be detrimental to the precision with which the tool can work, for instance the amount of torque that controllably can be delivered to a screw joint. Also, the material of the tool housing in the connection region between tool and the holder may be damaged by such movements.

The importance of a firm connection between the tool and the holder is reflected in the propensity of workers to overtighten the holder when attaching it to the tool. This overtightening may in itself lead to deformation of the housing of the tool, thus damaging vital internal parts such as the gears, motor or torque transmitter.

### Summary of the invention

It is an object of the present invention to propose a solution for or a reduction of the problems of prior art. A main object is consequently to reduce the risk of damaging a power tool when tightly attaching it to a power tool holder.

The invention provides a solution with a power tool holder having the features of claim 1.

By providing at least one clamping part comprising at least one through hole located adjacent to the clamping surface of said clamping part, the clamping surface will flex when under pressure clamping a power tool. This flexing translates into a larger contact surface between the clamping part and the power tool and thus the surface pressure on the power tool is decreased compared to a prior art holder clamped with the same tension in the connection part. This considerably lessens the risk of damaging the power tool when tightening the holder.

Further advantageous aspects of the invention are disclosed in the dependent claims.

### Brief description of the drawings

Advantageous embodiments of the invention are described below in detail with reference to the accompanying drawings. On the drawings:
Fig. 1 illustrates a power tool holder according to prior art connected to an angled power tool,
Fig. 2 illustrates a power tool holder according to prior art connected to a straight power tool,
Fig. 3 illustrates a power tool holder according to the invention, and
Fig. 4 illustrates another power tool holder according to the invention.

### Detailed description

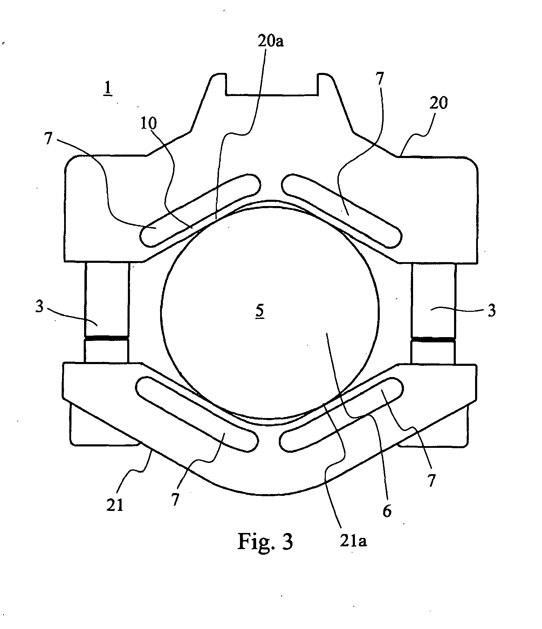

Fig. 3 illustrates as an example a power tool holder 1 comprising at least two clamping parts 20, 21 mutually movably connected to each other by at least one adjustable connection part 3. In figure 3, two connection parts 3 in the form of screws are shown as an example. In the figure, the clamping part 21 is provided with a hole (not shown explicitly) through which the screw 3 runs and the clamping part 20 is provided with a hole (not shown explicitly) with a thread in which the screw fits. In this way, by tightening of the screw, the clamping parts 20, 21 may be driven towards each other, clamping the tool 6 in between.

In fig. 3 there are two connection parts, but only one may be enough. A holder according to the one in fig. 3 with only one connection part would mean that the two connection parts would be swivellingly movable in relation to each other. This swivelling would be counteracted when the two clamping parts are close to the tool during clamping, since the tool then gets in the way preventing the swivelling. To further prevent swivelling, the single connection part could additionally comprise a control part that interconnects with a portion of each of the clamping parts. Such a control part could be a piece of material including grooves that mates with corresponding rims on the clamping parts, or *vice versa,* allowing mutual sliding but preventing mutual rotation of the clamping parts. Other connection parts 3 are also conceivable, as long they provide for an adjustable connection of the clamping parts. Also, the number of connection parts may also be more than one or two, for instance three or more, depending on the particular implementation.

As, seen in fig. 3, there are at least two clamping parts 20, 21. They have each a clamping surface 20a, 21 a, which clamping surfaces 20a, 21 a are facing each other. In the figure, the clamping surfaces are provided in the form of an arc-like shape comprising two flat portions at an angle to each other. Between the surfaces 20a, 21a, a clamping space 5 is formed, i.e. the room 5 between the clamping parts that will accommodate the power tool 6. The power tool 6 can be clamped by an adjustment of the connection part 3 to move the clamping parts 20, 21 together, for instance by rotation of screws as mentioned above.

A distinguishing feature of the holder 1 of the invention is that at least one clamping part 20, 21 comprises at least one through hole 7 located adjacent to the clamping surface 20a, 21a of said clamping part 20, 21 such that the clamping surface 20a, 21a will flex when under pressure clamping a power tool 6. This flexing is due to the relatively thin wall 10 of material, between the hole 7 and the clamping surface, that will yield somewhat when under pressure. The flexing of the clamping surface provides a larger contact surface between the clamping part 20, 21 and the power tool 6 leading to a lower surface pressure on the tool 6 for a given clamping tension in the connection part(s). At least one through hole 7, as mentioned earlier, is needed in order to provide this benefit. However more holes may also be provided, as is the case in fig. 3. It should be noted that even though the surface pressure on the power tool will be lower, the frictional force between the power tool and the holder stays the same for a given tension in the connection part(s) since the contact surface between the tool and the holder has increased due to the flexing of the clamping surface(s).

Thus, instead of making contact substantially along a line formed by the points of contact between the power tool and the holder as in the prior art, the contact surface according to the holder of the invention will be in the form of a surface due to the flexing of the clamping surfaces of the invention.

As mentioned, the power tool holder 1 according to the invention may comprise at least one clamping surface 20a, 21a that comprises two flat portions. Such portions may be directed towards the clamping space 5 at an angle of less than 180° between them, as seen in fig. 3. This makes it possible to use the power tool holder with power tools of different diameters; each such different tool will make contact with the two flat portions of the clamping surface at slightly different positions. Thus, a universal clamping character of the tool holder is afforded.

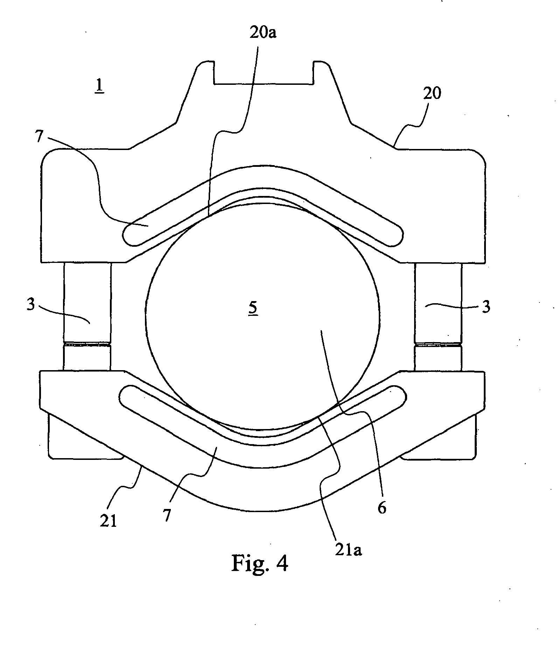

A particular case of the power tool holder 1 according to the invention would be a tool holder where each clamping surface 20a, 21 a of two clamping parts 20, 21 comprises two flat portions directed towards the clamping space 5 at an angle of less than 180° between them. This resembles the case of figs. 3 and 4 and constitutes a stable solution that firmly will clamp a tool.

It should be noted that other peripheries of the clamping surfaces, even convex ones, given the right flex of the surface are possible.

As has been mentioned, at least one through hole 7 should be provided in at least one clamping part of the tool holder. A power tool holder 1 according to any of the embodiments of the invention wherein *each* clamping part 20, 21 comprises at least one such through hole 7 would provide the benefit of further reducing surface pressure on a tool when clamped with a given tension in the connection part(s). Also, since all clamping parts in this case have a clamping surface that flexes, the overall distribution of surface pressure on a clamped tool will be more even. The through holes would be located adjacent to the clamping surface 20a, 21 a of said each clamping part 20, 21.

A variant of the previous embodiment would be a power tool holder wherein each clamping part 20, 21 comprises one through hole 7. Such an embodiment is depicted as an example in fig. 4. Having only one hole potentially means less machining steps when producing the power tool holder, so production cost may be lower.

In any of the embodiments of the power tool holder 1 according the invention, a through hole 7 may have a cross section form of an elongated oval. This form of the hole has been depicted as an example in figs. 3 and 4 and has the advantage of providing a good flexibility along the clamping surface. In this way, power tools having different diameters that engage with different portions of the clamping surface could be accommodated.

The power tool holder 1 according to any of the previous embodiments may in one embodiment comprise two adjustment parts 3 interconnecting the clamping parts 20, 21. This is a straightforward solution that provides a balanced pressure when clamping a power tool. It has been shown as an example in the figures 3 and 4.

A suitable material for a clamping part 20, 21 comprising at least one through hole 7 is high-tensile steel having a yield strength between around 750 - 1500 MPa, for instance about 900 - 1100 MPa. This choice of material provides good flexibility with moderate material use and such material also does not suffer from material fatigue. Of course, other materials may also be used, such as other metals or synthetic materials.

A through hole 7 in a clamping part may be filled with a material which is softer than the material of the clamping part, preferably a highly flexible material in order not to impair the flexing ability of the clamping surface. Filling a hole with such a material would for instance prevent the hole from getting caught on some protruding object when moving the power tool holder about.

The invention also comprises an assembly comprising a power tool holder 1 according to any of the previous embodiments and a support arm 9. The assembly may further comprise a power tool 6.

## Claims

1. Power tool holder (1) comprising at least two clamping parts (20, 21) mutually movably connected to each other by at least one adjustable connection part (3), the at least two clamping parts (20, 21) having each a clamping surface (20a, 21a), which clamping surfaces (20a, 21a) are facing each other to form a clamping space (5) between them, wherein a power tool (6) may be clamped by an adjustment of the connection part (3) to move the clamping parts (20, 21) together, **characterised in that** at least one clamping part (20, 21) comprises at least one through hole (7) located adjacent the clamping surface (20a, 21a) of said clamping part (20, 21), such that a wall (10) is formed between the clamping surface (20a, 21a) and the through hole (7) and such that the clamping surface (20a, 21a) will flex when subjected to pressure upon clamping a power tool (6).

2. Power tool holder (1) according to claim 1, wherein at least one clamping surface (20a, 21a) comprises two flat portions that faces the clamping space (5) at an angle of less than 180° between them.

3. Power tool holder (1) according to claim 1, wherein each clamping surface (20a, 21a) of two clamping parts (20, 21) comprises two flat portions directed towards the clamping space (5) at an angle of less than 180° between them.

4. Power tool holder (1) according to any of the claims 1, 2 or 3, wherein each clamping part (20, 21) comprises at least one through hole (7) located adjacent to the clamping surface (20a, 21a) of said each clamping part (20, 21).

5. Power tool holder (1) according to claim 4, wherein each clamping part (20, 21) comprises one through hole (7).

6. Power tool holder (1) according to any of the previous claims, wherein a through hole (7) has a cross section form of an elongated oval.

7. Power tool holder (1) according to any of the previous claims, wherein there are two adjustment parts (3) interconnecting the clamping parts (20, 21).

8. Power tool holder (1) according to any of the previous claims, wherein said at least one clamping part (20, 21) comprising at least one through hole (7) is made of high-tensile steel having a yield strength between about 750-1500, preferably between 900 - 1100 MPa.

9. Assembly comprising:
- a power tool holder (1) according to any of the previous claims, and
- a support arm (9).

10. Assembly according to claim 9, further comprising a power tool (6).

## Patentansprüche

1. Elektrowerkzeughalter (1), umfassend mindestens zwei Klemmteile (20, 21), die durch mindestens ein anpassbares Verbindungsteil (3) gegenseitig beweglich miteinander verbunden sind, wobei die mindestens zwei Klemmteile (20, 21) jeweils eine Klemmoberfläche (20a, 21a) haben, wobei die Klemmoberflächen (20a, 21a) sich gegenüberliegen, um zwischen ihnen einen Klemmraum (5) zu bilden, wobei ein Elektrowerkzeug (6) durch eine Anpassung des Verbindungsteils (3), um die Klemmteile (20, 21) zusammenzubewegen, eingeklemmt werden kann, **dadurch gekennzeichnet, dass** mindestens ein Klemmteil (20, 21) mindestens ein Durchgangsloch (7) umfasst, das sich neben der Klemmoberfläche (20a, 21a) des Klemmteils (20, 21) befindet, sodass eine Wand (10) zwischen der Klemmoberfläche (20a, 21a) und dem Durchgangsloch (7) gebildet wird, sodass die Klemmoberfläche (20a, 21a) sich biegt, wenn sie Druck durch Einklemmen eines Elektrowerkzeugs (6) ausgesetzt ist.

2. Elektrowerkzeughalter (1) nach Anspruch 1, wobei mindestens eine Klemmoberfläche (20a, 21a) zwei flache Abschnitte umfasst, die dem Klemmraum (5) in einem Winkel von weniger als 180° zwischen ihnen gegenüberliegen.

3. Elektrowerkzeughalter (1) nach Anspruch 1, wobei jede Klemmoberfläche (20a, 21a) der zwei Klemmteile (20, 21) zwei flache Abschnitte umfasst, die in einem Winkel von weniger als 180° zwischen ihnen in Richtung des Klemmraums (5) gerichtet sind.

4. Elektrowerkzeughalter (1) nach einem der Ansprüche 1, 2 oder 3, wobei jedes Klemmteil (20, 21) mindestens ein Durchgangsloch (7) umfasst, das sich neben der Klemmoberfläche (20a, 21a) jedes Klemmteils (20, 21) befindet.

5. Elektrowerkzeughalter (1) nach Anspruch 4, wobei jedes Klemmteil (20, 21) ein Durchgangsloch (7) umfasst.

6. Elektrowerkzeughalter (1) nach einem der vorstehenden Ansprüche, wobei ein Durchgangsloch (7) eine Querschnittsform eines länglichen Ovals hat.

7. Elektrowerkzeughalter (1) nach einem der vorstehenden Ansprüche, wobei es zwei Anpassungsteile (3) gibt, die die Klemmteile (20, 21) miteinander verbinden.

8. Elektrowerkzeughalter (1) nach einem der vorstehenden Ansprüche, wobei das mindestens eine Klemmteil (20, 21), das mindestens ein Durchgangsloch (7) umfasst, aus hochfestem Stahl mit einer Streckgrenze zwischen 750 - 1500, bevorzugt zwischen 900 - 1100 MPa gefertigt ist.

9. Anordnung, umfassend:
- einen Elektrowerkzeughalter (1) nach einem der vorstehenden Ansprüche, und
- einen Tragarm (9).

10. Anordnung nach Anspruch 9, weiter umfassend ein Elektrowerkzeug (6).

## Revendications

1. Support pour outil électrique (1) comprenant au moins deux parties d'accrochage (20, 21) mutuellement raccordées l'une à l'autre par au moins une partie de raccordement ajustable (3), les au moins deux parties en forme de pince (20, 21) ayant chacune une surface d'accrochage (20a, 21a) avec les surfaces d'accrochage (20a, 21a) l'une en face de l'autre pour former un espace d'accrochage (5) entre elles où un outil électrique (6) peut être accroché par un ajustement d'une partie de raccordement (3) pour déplacer les parties d'accrochage (20, 21) ensemble,
**caractérisé en ce qu'**au moins une partie d'accrochage (20, 21) comprend au moins un orifice (7) situé à côté de la surface d'accrochage (20a, 21a) de ladite partie d'accrochage (20, 21), de sorte qu'une paroi (10) se forme entre la surface d'accrochage (20a, 21a) et l'orifice (7) et de sorte que la surface d'accrochage (20a, 21a) fléchira quand elle est soumise à une pression à l'accrochage d'un outil électrique (6).

2. Support pour outil électrique (1) selon la revendication 1, dans lequel au moins une surface d'accrochage (20a, 21a) des deux parties d'accrochage (20, 21) comprend deux portions plates qui font face à l'espace d'accrochage (5) à un angle de moins de 180° entre elles.

3. Support pour outil électrique (1) selon la revendication 1, dans lequel chaque surface d'accrochage (20a, 21a) des deux parties d'accrochage (20, 21) comprend deux portions plates qui font face à l'espace d'accrochage (5) à un angle de moins de 180° entre elles.

4. Support pour outil électrique (1) selon la revendication 1, 2 ou 3 dans lequel chaque partie d'accrochage (20, 21) comprend au moins un orifice (7) situé à côté de la surface d'accrochage (20a, 21a) de ladite partie d'accrochage (20, 21).

5. Support pour outil électrique (1) selon la revendication 4 dans lequel chaque partie d'accrochage (20, 21) comprend un orifice (7) .

6. Support pour outil électrique (1) selon l'une quelconque des revendications précédentes, dans lequel un orifice (7) a une section en coupe en forme d'ovale allongé.

7. Support pour outil électrique (1) selon l'une quelconque des revendications précédentes, dans lequel il y a deux parties de réglage (3) interconnectant les parties d'accrochage (20, 21) .

8. Support pour outil électrique (1) selon l'une quelconque des revendications précédentes, dans lequel au moins une partie d'accrochage (20, 21) comprenant au moins un orifice (7) est constitué d'acier hautement malléable ayant une limite d'élasticité entre environ 750 et 1500, de préférence entre 900 et 1100 MPa.

9. Montage comprenant :
- un support pour outil électrique (1) selon l'une quelconque des revendications précédentes, et
- un bras support (9).

10. Montage selon la revendication 9 comprenant en outre un outil électrique (6).
